Europäisches Patentamt

(19) European Patent Office

Office européen des brevets

(11) Numéro de publication: **0 200 624**
**B1**

(12) **FASCICULE DE BREVET EUROPEEN**

(45) Date de publication du fascicule du brevet:
**02.08.89**

(21) Numéro de dépôt: **86400810.7**

(22) Date de dépôt: **15.04.86**

(51) Int. Cl.⁴: **H04N 3/15**

(54) Dispositif de lecture par transfert de ligne avec contre-réaction.

(30) Priorité: **19.04.85 FR 8506009**

(43) Date de publication de la demande:
**10.12.86 Bulletin 86/45**

(45) Mention de la délivrance du brevet:
**02.08.89 Bulletin 89/31**

(84) Etats contractants désignés:
**DE GB NL**

(56) Documents cités:
**EP-A- 0 078 038**

(73) Titulaire: **THOMSON-CSF, 51, Esplanade du Général de Gaulle, F-92800 Puteaux(FR)**

(72) Inventeur: **Boucharlat, Gilles THOMSON-CSF SCPI, 19 avenue de Messine, F-75008 Paris(FR)**
Inventeur: **Brissot, Louis THOMSON-CSF SCPI, 19 avenue de Messine, F-75008 Paris(FR)**

(74) Mandataire: **Mayeux, Michèle et al, THOMSON-CSF SCPI, F-92045 PARIS LA DEFENSE CEDEX 67(FR)**

## Description

La présente invention concerne un dispositif de lecture par transfert de ligne avec contre-réaction.

Il est bien connu dans l'art antérieur d'effectuer la lecture de matrices de détecteurs photosensibles, tels que par exemple des diodes ou des transistors MOS, par la méthode du transfert de ligne (voir par ex. la demande de brevet EP-A 0 078 038).

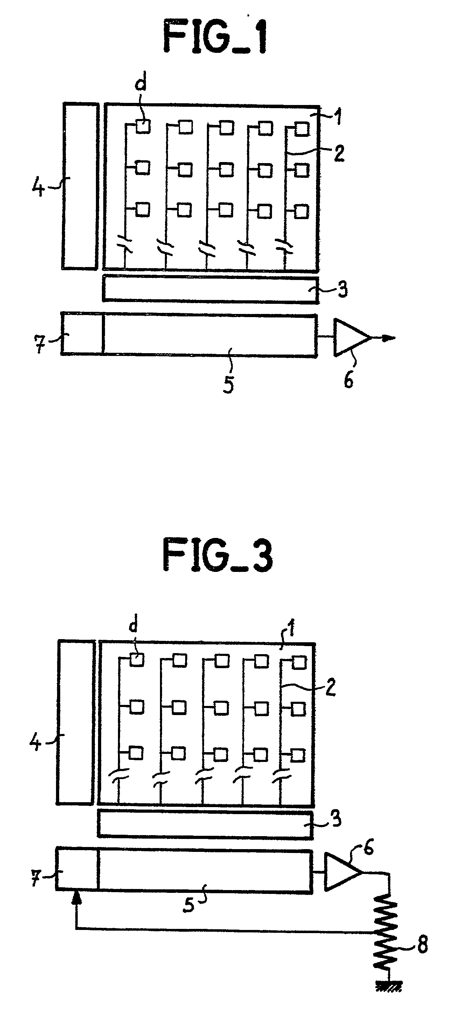

Sur la figure 1, on a représenté de façon schématique un tel dispositif de lecture par transfert de ligne. Ce dispositif comporte une matrice 1 de détecteurs photosensibles d disposés sous forme de lignes et de colonnes. Des bus conducteurs 2 relient les détecteurs disposés selon une même colonne à l'entrée d'une mémoire de ligne 3. Un registre à décalage 4 permet d'adresser une ligne de détecteurs de la matrice. Les charges provenant des détecteurs de la ligne adressée sont transférées dans la mémoire de ligne 3, puis dans un registre à décalage à transfert de charge 5 dont la sortie est reliée à un amplificateur 6.

Pour améliorer l'efficacité de transfert des charges provenant des bus 2, de capacités élevées de l'ordre de quelques picofarads par exemple, jusqu'au registre à décalage à transfert de charge 5, on utilise une charge d'entraînement $Q_E$. Cette charge est transférée de chaque étage du registre 5 vers la mémoire 3 puis vers un bus 2, et se trouve ensuite superposée aux charges-signal $Q_S$, qui arrivent sur ce bus, transférée dans la mémoire de ligne, puis dans le registre 5, pour être lue superposée aux charges-signal.

Sur la figure 1, on a représenté un mode de réalisation dans lequel un étage 7 assure l'injection de charges d'entraînement identiques à l'entrée du registre 5. Alors qu'on lit le registre 5, on introduit dans chaque étage du registre qui vient d'être lu une charge d'entraînement $Q_E$.

L'utilisation de charges d'entraînement suivant un tel parcours (registre, mémoire, bus ensuite bus, mémoire, registre et lecture avec les charges-signal) est connue dans la littérature anglo-saxonne sous le nom de "Charge Priming Device" ou C.P.D. On améliore ainsi l'efficacité de transfert c'est-à-dire la lecture des charges provenant des bus.

Une lecture incomplète des charges provenant des bus modifie le potentiel de repos des bus et introduit un mélange des informations provenant de deux lignes de la matrice lues successivement. Ceci se traduit par une perte de résolution verticale lorsque le dispositif est utilisé pour l'analyse d'image, c'est-à-dire lorsqu'on lit successivement deux lignes adjacentes. Le phénomène observé est beaucoup plus gênant lorsque les deux lignes lues successivement ne sont pas adjacentes, c'est-à-dire lorsqu'on effectue un adressage aléatoire des lignes, comme en robotique par exemple. Cela se traduit alors par l'apparition de signaux parasites.

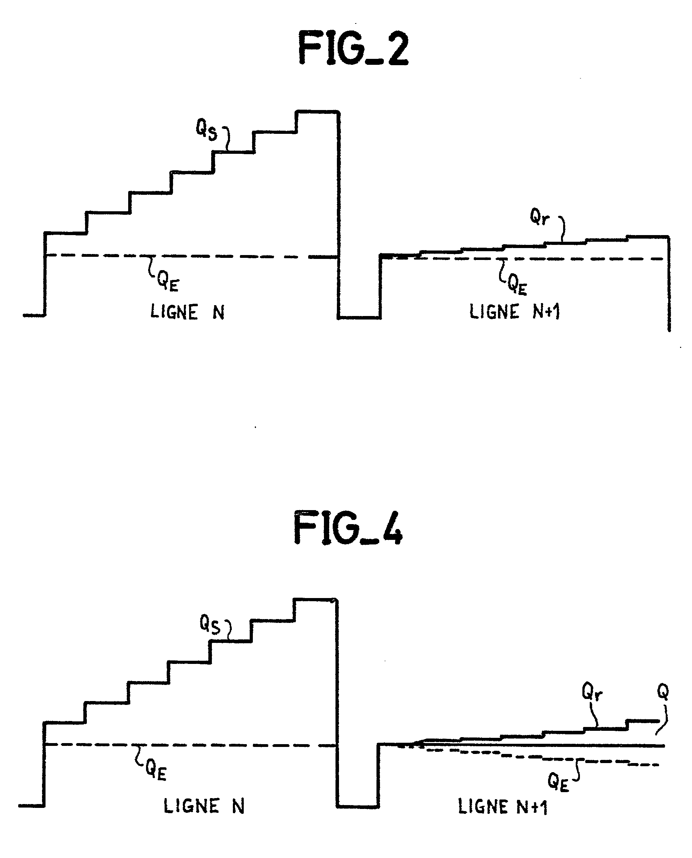

Sur la figure 2, on a représenté, sur la gauche, les quantités de charges-signal $Q_S$ obtenues à la sortie du registre 5 lorsqu'on lit une ligne N. Ces charges-signal sont superposées à une charge d'entraînement $Q_E$, de valeur constante, représentée en pointillés.

Sur la figure 2, partie droite, on a représenté la lecture de la ligne N+1 qui ne contient pas de charge-signal. On trouve, superposées à la charge d'entraînement constante $Q_E$, une charge-signal résiduelle $Q_r$, qui a le même profil que la charge-signal $Q_S$ de la ligne N qui est représentée sur la figure 2, partie gauche.

La présente invention concerne un dispositif de lecture par transfert de ligne avec contre-réaction qui permet d'annuler sensiblement les effets de la lecture incomplète des charges se trouvant sur les bus.

L'invention permet donc d'améliorer la FTM verticale, dans le cas d'un adressage vertical séquentiel et permet d'éliminer les signaux parasites dans le cas d'un adressage vertical aléatoire.

La présente invention concerne un dispositif de lecture d'une matrice de détecteurs photosensibles par transfert de ligne, muni d'un étage permettant l'injection en série d'une charge d'entraînement à l'entrée d'un registre assurant la lecture successivement de chaque ligne de détecteurs de la matrice, caractérisé en ce qu'il comporte des moyens assurant une réaction d'une partie du signal vidéo d'une ligne de la matrice qui est lue sur l'étage d'injection, de façon à moduler la valeur de la charge d'entraînement s'ajoutant au signal vidéo de la ligne de la matrice qui sera lue ensuite, cette modulation étant inversement proportionnelle au signal vidéo de la ligne qui est lue et dépendant de l'inefficacité de transfert du dispositif.

D'autre objets, caractéristiques et résultats de l'invention ressortiront de la description suivante, donnée à titre d'exemple non limitatif et illustrée par les figures annexées qui représentent:

- la figure 1, le schéma d'un dispositif de lecture par transfert de ligne selon l'art antérieur,
- la figure 2, un schéma illustrant le fonctionnement du dispositif de la figure 1,
- la figure 3, le schéma d'un mode de réalisation d'un dispositif de lecture par transfert de ligne selon l'invention ;
- la figure 4, un schéma illustrant le fonctionnement du dispositif de la figure 3 ;
- les figures 5a et b, le schéma d'un mode de réalisation d'un étage d'injection des charges et un schéma expliquant son fonctionnement;
- la figure 6, la caractéristique de transfert des charges entre les bus et le registre ;
- la figure 7, la courbe montrant les évolutions du potentiel d'un bus au cours d'une séquence de lecture.

Sur les différentes figures, les mêmes repères désignent les mêmes éléments, mais, pour des raisons de clarté, les cotes et proportions des divers éléments ne sont pas respectées.

La figure 3 représente le schéma d'un mode de réalisation d'un dispositif photosensible par transfert de ligne selon l'invention.

Ce dispositif diffère de l'art antérieur car il comporte des moyens assurant une réaction d'une partie du signal video d'une ligne de la matrice qui est lue sur l'étage d'injection 7 de façon à moduler la valeur de la charge d'entraînement s'ajoutant au signal vidéo de la ligne de la matrice qui sera lue ensuite. Sur la figure 3, ces moyens sont schématisés par une potentiomètre 8 dont le point milieu est relié à l'étage d'injection 7 des charges d'entraînement.

La figure 4 est un schéma illustrant le fonctionnement du dispositif de la figure 3.

Sur la partie gauche de la figure 4, on a représenté le signal de sortie du registre 5 lors de la lecture d'une ligne N. Ce signal de sortie est constitué par la superposition d'une charge d'entraînement constante $Q_E$ et d'une charge-signal en escalier $Q_S$.

Sur la partie droite de la figure 4, on a représenté le signal résiduel $Q_r$, ayant le même profil que $Q_S$ qui est présent dans le registre 5, lors de la lecture suivante qui peut être la lecture de la ligne N+1 par exemple.

Selon l'invention, on injecte dans le registre 5 une charge d'entraînement $Q_E$ qui vise à compenser le signal $Q_r$. La charge d'entraînement $Q_E$ de la figure 4, partie droite, n'est donc pas constante mais présente un profil inverse à celui de $Q_r$.

Dans l'exemple de la figure 4, à droite, où la charge-signal $Q_S$ de la ligne N+1 est nulle, on obtient en sortie du registre 5 une charge sensiblement constante Q égale à la somme de la charge résiduelle $Q_r$ et de la charge d'entraînement $Q_E$ ayant subi une contre-réaction.

La modulation de la charge d'entraînement qui est réalisée modifie sa valeur de façon inversement proportionnelle à celle du signal de lecture de la ligne qui est lue et en fonction de l'inefficacité de transfert du dispositif.

Cette modulation de la charge d'entraînement est réalisée pour chaque valeur de la charge d'entraînement qui est entrée dans un étage du registre 5.

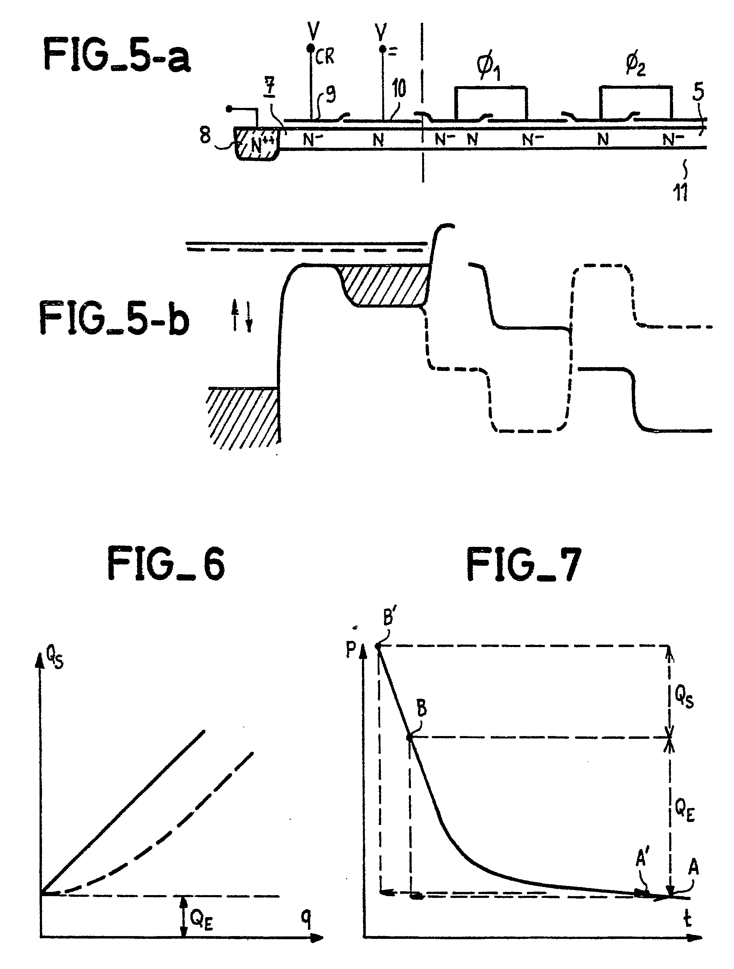

Sur la figure 5a, on a représenté de façon détaillée un mode de réalisation de l'étage d'injection 7.

Cet étage d'injection 7 est constitué par une diode 8 suivie par deux grilles 9 et 10 qui conduisent au registre à décalage 5.

Dans le mode de réalisation de la figure 5a, le sens de transfert des charges, de la gauche vers la droite, dans l'étage d'injection et dans le registre est imposé par des implantations successivement de type N− et N dans un substrat semi-conducteur 11 de type P. Le transfert des charges s'effectue en volume.

On peut bien entendu fixer le sens de transfert des charges, par exemple, par des épaisseurs d'oxyde différentes ou par des potentiels différents sur les différentes électrodes.

Les charges sont injectées dans l'étage 7 selon le mode "fill and spill".

La diode d'injection 8 est donc successivement portée à un niveau bas puis à un niveau haut, comme cela est illustré sur la figure 5b qui représente les potentiels de surface dans le substrat. Lorsque la diode est portée au niveau bas, il y a stockage de charges sous la grille 10 portée à un potentiel V constant.

La grille 9 reçoit une tension $V_{CR}$ provenant du point milieu du potentiomètre 8 - voir figure 3 - et qui est proportionnelle au signal de sortie du registre 5.

Plus cette tension $V_{CR}$ est importante, plus la charge stockée sous la grille 10, et transmise ensuite dans le registre, est faible. Il y a donc bien une contre-réaction.

Le mode "fill and spill" présente notamment les avantages suivants :
- la charge d'entraînement qui est ainsi injectée présente une fluctuation aléatoire minimale de son amplitude ;
- de plus, ce mode assure une insensibilité maximale aux parasites extérieurs.

Ces avantages sont dus au fait que la quantité de charge stockée dépend seulement de la différence des potentiels de surface sous les deux grilles 9 et 10, qui sont voisines et fortement couplées. Même si la diode d'injection 8 est soumise à des parasites, cela n'influe pas sur la quantité de charge injectée.

On peut bien sûr envisager diverses variantes à l'étage d'injection 7. Par exemple, on peut appliquer une tension constante sur la grille 9 et une tension variable sur la grille 10 de façon à moduler la valeur de la charge d'entraînement.

L'invention présente un autre avantage qui est de linéariser la caractéristique de transfert représentant la quantité de charge lue $Q_S$ en sortie du registre 5 pour une ligne en fonction de la quantité de charge q sur les bus correspondant avant le transfert.

Cette caractéristique est représentée sur la figure 6 où l'on a également représenté en pointillés une caractéristique non linéaire.

Cette linéarisation est expliquée à l'aide de la figure 7 qui représente les évolutions du potentiel d'un bus P au cours d'une séquence de lecture.

Sur cette courbe, on a représenté le point A qui est le point de repos en l'absence de charges-signal. Ce point de repos résulte des itérations précédentes.

Lorsqu'un bus reçoit une charge d'entraînement $Q_E$, puis une charge-signal $Q_S$, son potentiel passe en B, puis en B'.

La lecture des charges ramène le potentiel du bus en un point A' différent du point A.

L'écart de potentiel entre A' et A est représentatif de l'inefficacité de transfert.

Or cet écart de potentiel dépend de la position du point de départ donc de l'amplitude des charges-signal lues précédemment.

L'écart entre A' et A n'introduit qu'un effet du second ordre si l'amplitude de la charge d'entraînement est correctement choisie.

Ainsi la plage des gris n'est pas dégradée si le dispositif est utilisé pour l'analyse d'image.

Par contre dans des applications de photométrie, les erreurs systématiques de linéarité peuvent devenir non négligeables.

La contre-réaction selon l'invention où la charge d'entraînement pour chaque bus est modulée en fonction de l'amplitude des signaux de la ligne précédemment lue, de façon à compenser la charge-signal résiduelle, permet de revenir sensiblement au même point A après l'apport de la charge d'entraînement, de la charge-signal et après la lecture des charges. Le point de repos sur la courbe se trouve stabilisé et la caractéristique de transfert est linéarisée.

**Revendications**

1. Dispositif de lecture d'une matrice (1) de détecteurs photosensibles (d) par transfert de ligne, muni d'un étage (7) permettant l'injection en série d'une charge d'entraînement ($Q_E$) à l'entrée d'un registre (5) assurant la lecture successivement de chaque ligne de détecteurs de la matrice, caractérisé en ce qu'il comporte des moyens (8) assurant une réaction d'une partie du signal vidéo d'une ligne de la matrice qui est lue sur l'étage d'injection (7), de façon à moduler la valeur de la charge d'entraînement ($Q_E$) s'ajoutant au signal vidéo de la ligne de la matrice qui sera lue ensuite, cette modulation étant inversement proportionnelle au signal vidéo de la ligne qui est lue et dépendant de l'inefficacité de transfert du dispositif.

2. Dispositif selon la revendication 1, caractérisé en ce que l'étage d'injection (7) fonctionne sur le mode "fill and spill" et comporte :
   - une diode (8) portée successivement à un niveau bas et à un niveau haut ;
   - deux grilles (9 et 10), la première recevant une partie du signal vidéo issu du registre (5) et la deuxième reliée à une tension de polarisation constante (V).

**Patentansprüche**

1. Vorrichtung zum Lesen einer Matrix (1) aus lichtempfindlichen Detektoren (d) durch Zeilentransfer, mit einer Stufe (7) zur seriellen Einspeisung einer Treiberladung ($Q_E$) in den Eingang eines Registers (5), welches nacheinander das Lesen jeder Detektorzeile der Matrix gewährleistet, dadurch gekennzeichnet, daß sie Mittel (8) zur Rückkopplung eines Teils des Bildsignals einer gerade gelesenen Matrixzeile auf die Einspeisestufe (7) aufweist, derart, daß die Größe der Treiberladung ($Q_E$) moduliert wird, die dem Bildsignal der anschliessend gelesenen Matrixzeile hinzugefügt wird, wobei die Modulation dem gerade gelesenen Zeilensignal umgekehrt proportional ist und von der Transferunwirksamkeit der Vorrichtung abhängt.

2. Vorrichtung nach Anspruch 1, dadurch gekennzeichnet, daß die Einspeisestufe (7) nach dem "fill and spill" Modus arbeitet und:
   - eine nacheinander auf einen tiefen und einen hohen Pegel gebrachte Diode (8) sowie
   - zwei Gitter (9 und 10) aufweist, von denen das erste einen Teil des vom Register (5) ausgegebenen Bildsignals (5) und das zweite an eine konstante Vorspannung (V) angeschlossen ist.

**Claims**

1. A line transfer read-out device for a matrix (1) of photosensitive detectors (d), equipped with a stage (7) permitting the serial injection of a driver charge ($Q_E$) at the input of a register (5) adapted to ensure successively the read-out of each detector line of the matrix, characterized in that it comprises means (8) ensuring a feedback of a portion of the video signal of a matrix line, which is being read, to the injection stage (7), in such a way as to modulate the value of the driver charge ($Q_E$), which is added to the video signal of the matrix line which will be subsequently read out, this modulation being inversely proportional to the video signal of the line which is being read out, and dependant upon the transfer inefficiency of the device.

2. A device according to claim 1, characterized in that the injection stage (7) operates according to the "fill and spill" mode and that it comprises:
   - a diode (8) controlled to assume successively a low level and a high level,
   - two grids (9 and 10), the first one receiving a portion of the video signal issued by the register (5), and the second one being connected to a constant biassing voltage (V).

# FIG_1

# FIG_3

# FIG_2

$Q_S$

$Q_E$

LIGNE N

$Q_r$

$Q_E$

LIGNE N+1

# FIG_4

$Q_S$

$Q_E$

LIGNE N

$Q_r$

$Q$

$Q_E$

LIGNE N+1

EP 0 200 624 B1

FIG_5-a

$V_{CR}$  $V_=$  $\phi_1$  $\phi_2$

8  N++  N⁻  N  N⁻ N  N⁻  N  N⁻  11  5

FIG_5-b

FIG_6

FIG_7